# FASCICULE DE BREVET EUROPEEN

(11) **EP 2 209 655 B1**
(45) Date de publication et mention de la délivrance du brevet: **31.08.2011**
(21) Numéro de dépôt: 08870086.9
(22) Date de dépôt: 10.10.2008
(51) Int. Cl.: B60C 7/00, B60C 7/12

(54) **PNEUMATIQUE A VIROLE ET A STRUCTURE PORTEUSE**
REIFEN MIT MANTEL- UND TRÄGERSTRUKTUR
TYRE WITH SHELL AND CARRIER STRUCTURE

(30) Priorité: 15.10.2007 FR 0707218
(43) Date de publication de la demande: 28.07.2010
(73) Titulaire: Société de Technologie Michelin, 63000 Clermont-Ferrand (FR); Michelin Recherche et Technique S.A., 1763 Granges-Paccot (CH)
(72) Inventeur: DEAL, Michel, F-03110 St.-Remy-en-Rollat (FR)
(74) Mandataire: Randl, Oliver Georg
(86) Numéro de dépôt international: PCT/FR2008/001428
(87) Numéro de publication internationale: WO 2009/087291

(56) Documents cités:
- JP-A- 2007 118 913
- JP-A- 2007 238 019
- US-A- 4 235 270

## Description

L'invention concerne, de façon générale, l'équipement des véhicules à moteur.

Plus précisément, l'invention concerne un pneu comprenant une enveloppe au moins partiellement réalisée en gomme, délimitant un volume annulaire intérieur soumis en fonctionnement à une pression de gonflage et présentant un sommet et deux flancs, le sommet se raccordant à chacun des deux flancs et définissant une bande de roulement, ce pneu comprenant en outre au moins une virole interne, une virole externe, et une structure porteuse, la virole interne étant disposée de manière concentrique à l'intérieur et à distance du sommet, la virole externe appartenant au sommet du pneu, et la structure porteuse étant logée au moins partiellement dans le volume intérieur et reliant l'une à l'autre les viroles externe et interne.

Un pneu de ce type est par exemple décrit dans le brevet US 4 235 270.

Dans un pneu traditionnel, les flancs servent à la fois à transmettre jusqu'à la jante les efforts exercés par le sol sur la bande de roulement, et à assurer le guidage de cette dernière.

Bien que la structure porteuse d'un pneu tel que décrit dans le brevet US 4 235 270 coopère avec les flancs de ce pneu pour transmettre les efforts entre les viroles interne et externe, cette structure massive intervient nécessairement aussi, et de façon importante, dans le guidage de la bande de roulement.

Or, les contraintes associées à cette double fonction imposent, lors de la phase de conception du pneu, des compromis délicats notamment en termes de poids, de complexité structurelle, de valeur maximale du couple transmissible, et de déformations du pneu, qui sont sources d'échauffement interne.

L'invention, qui se situe dans ce contexte, a pour but de proposer un pneu dont la structure permette de réduire la sévérité de ces contraintes.

A cette fin, le pneu de l'invention, par ailleurs conforme à la définition générique qu'en donne le préambule ci-dessus, est essentiellement caractérisé en ce que la structure porteuse est pressurisée par la pression de gonflage et partage le volume annulaire du pneu en une pluralité de compartiments ou d'alvéoles, et en ce que les flancs sont liés ou intégrés à la structure porteuse.

Grâce à cet agencement, la structure porteuse se trouve rigidifiée par la pression interne du pneu et peut donc être essentiellement réalisée au moyen de parois fines et légères.

La virole externe est avantageusement formée d'une feuille annulaire continue, sur laquelle sont adhérisés des pavés de gomme constituant la bande de roulement.

Dans un mode de réalisation possible, les viroles interne et externe sont étanches et les flancs sont formés de parois latérales se raccordant de façon étanche aux viroles externe et interne pour délimiter ledit volume annulaire de façon étanche.

Chaque virole peut être constituée d'une feuille annulaire continue réalisée en métal ou en un alliage métallique, et notamment réalisée dans un matériau compris dans d'ensemble incluant l'acier inoxydable et un alliage d'aluminium.

La structure porteuse comprend par exemple un ensemble de lamelles radiales partageant le volume annulaire en une pluralité de compartiments se succédant les uns aux autres suivant une direction tangentielle du pneu.

En variante, la structure porteuse peut aussi comprendre un ensemble de parois internes partageant le volume annulaire en une pluralité d'alvéoles en nid d'abeille juxtaposées à la fois suivant une direction tangentielle et suivant une direction radiale du pneu.

Quel que soit le mode de réalisation choisi, il peut être judicieux de prévoir que certaines au moins desdites alvéoles soient étanches vis-à-vis des autres alvéoles.

D'autres caractéristiques et avantages de l'invention ressortiront clairement de la description qui en est faite ci-après, à titre indicatif et nullement limitatif, en référence aux dessins annexés, dans lesquels :

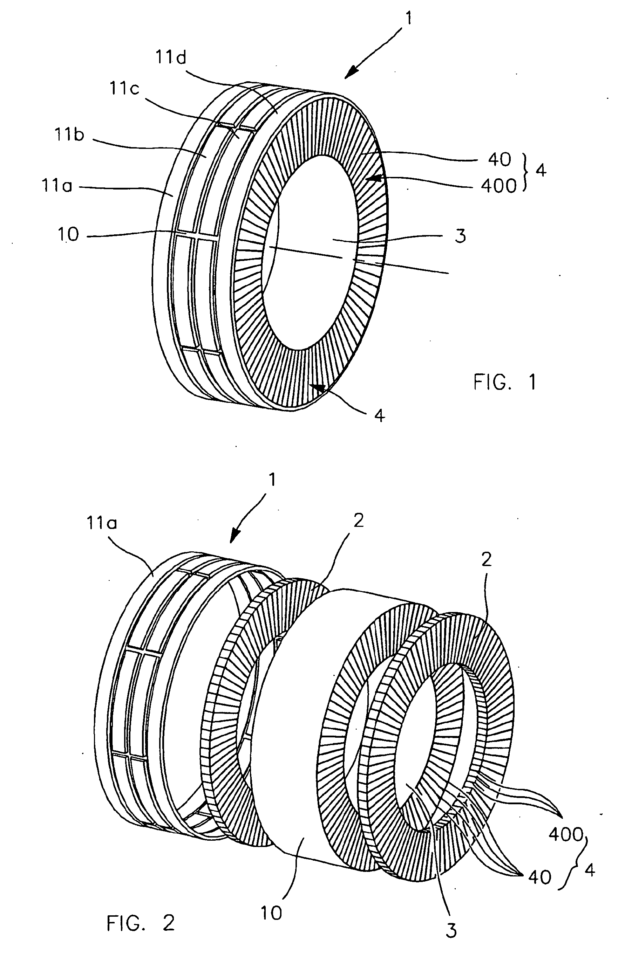

- la figure 1 est une vue partielle en perspective d'un pneu conforme à un premier mode de réalisation possible de l'invention;
- la figure 2 est une vue en perspective éclatée du pneu conforme au premier mode de réalisation;
- la figure 3 est une vue en coupe radiale du pneu illustré à la figure 2;
- la figure 4 est une vue en perspective d'une variante du pneu illustré à la figure 2;
- la figure 5 est une vue partielle en perspective d'un pneu conforme à un deuxième mode de réalisation possible de l'invention;
- la figure 6 est une vue en perspective d'un pneu conforme à un troisième mode de réalisation possible de l'invention;
- la figure 7 est une vue en perspective éclatée du pneu conforme au troisième mode de réalisation possible de l'invention;
- la figure 8 est une vue partielle en perspective éclatée de la structure porteuse du pneu conforme au troisième mode de réalisation possible de l'invention;
- la figure 9 est une vue en perspective de la structure porteuse d'un pneu réalisé suivant une variante du troisième mode de réalisation de l'invention;
- la figure 10 est une vue à échelle agrandie d'un détail de la structure porteuse illustrée à la figure 9;
- la figure 11 est une vue en perspective d'un pneu conforme à un quatrième mode de réalisation possible de l'invention;
- la figure 12 est une vue en coupe radiale du pneu illustré à la figure 11;
- la figure 13 est une vue en perspective éclatée du pneu conforme au quatrième mode de réalisation possible de l'invention;
- la figure 14 est une vue en perspective agrandie d'un élément de la structure porteuse du pneu illustré à la figure 13; et
- la figure 15 est une vue en coupe de la structure porteuse du pneu illustré à la figure 13.

Comme annoncé précédemment, l'invention concerne un pneumatique essentiellement considéré du point de vue de sa structure.

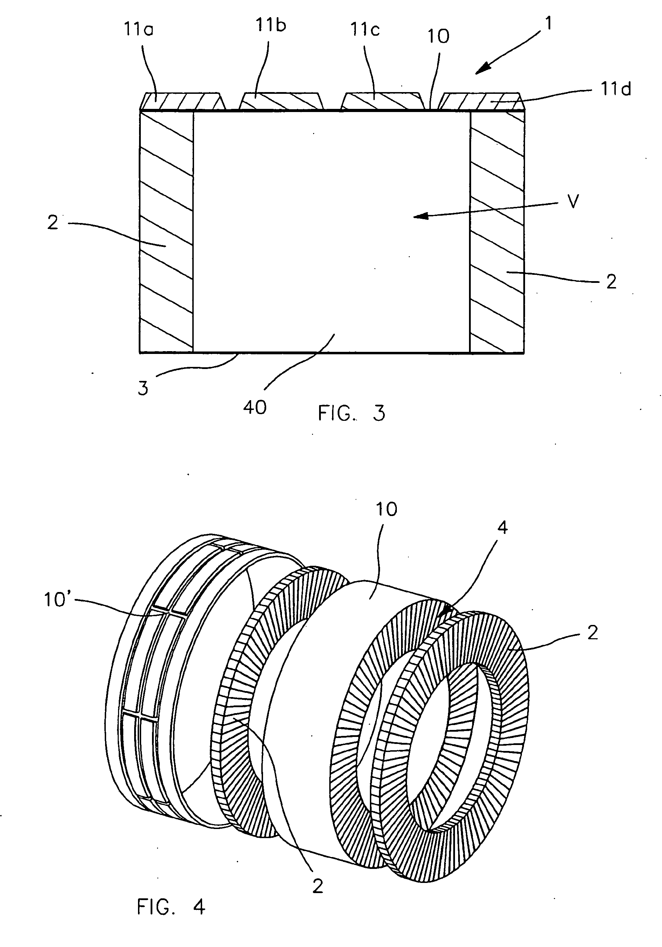

Un pneu conforme à l'invention comprend une enveloppe au moins partiellement réalisée en gomme, qui délimite, de façon étanche à l'air, un volume annulaire intérieur V (figure 3), et qui présente un sommet 1 et deux flancs 2.

Le sommet 1 se raccorde à chacun des deux flancs 2 et définit, sur sa face externe, une bande de roulement.

Le pneu selon l'invention comprend en outre au moins une virole interne 3, une virole externe 10, et une structure porteuse 4.

La virole interne 3 est disposée de manière concentrique à l'intérieur et à distance du sommet 1, la structure porteuse 4 étant logée au moins partiellement dans le volume intérieur V et reliant la virole interne 3 à la virole externe 10, qui fait partie intégrante du sommet 1.

Dans l'état de fonctionnement du pneu, le volume annulaire V délimité par les viroles 3 et 10, ainsi que par les parois 2, est étanche et pressurisé, c'est-à-dire soumis à une pression d'air interne supérieure à l'atmosphère, dite pression de gonflage.

Selon l'invention, la structure porteuse 4 est pressurisée par la pression de gonflage et partage le volume annulaire du pneu en une pluralité de volumes élémentaires qui seront ci-après dénommés compartiments ou alvéoles en fonction de leur forme.

De plus, les flancs 2 sont liés à la structure porteuse 4 ou intégrés à cette structure porteuse.

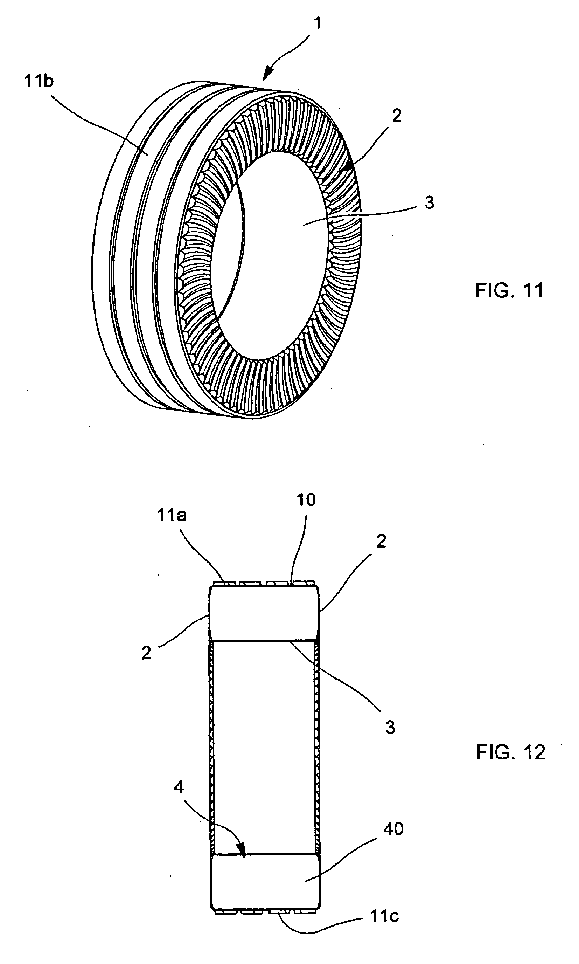

De préférence, et comme le montrent les figures 3 et 12, la virole externe 10 est formée d'une feuille annulaire continue, sur laquelle sont adhérisés des pavés de gomme, tels que 11a, 11b, 11c, et 11d, qui constituent la bande de roulement 1.

Chacune des viroles interne 3 et externe 10 est donc avantageusement étanche et se raccorder de façon étanche à deux parois latérales étanches qui constituent les flancs 2.

Chacune des viroles 3 et 10 peut notamment être constituée d'une feuille annulaire continue réalisée en métal ou en un alliage métallique, et par exemple constituée d'acier inoxydable et d'un alliage d'aluminium.

Dans le mode de réalisation illustré à la figure 4, le pneu comporte une telle virole externe 10, elle-même recouverte par une virole supplémentaire 10' qui porte les pavés de gomme constituant la bande de roulement 1.

Quel que soit le nombre de viroles externes, la structure porteuse 4 partage le volume annulaire V en une pluralité de compartiments 400 ou d'alvéoles 410 collectivement étanches vis-à-vis de l'environnement du pneu, et dont certains au moins peuvent être étanches vis-à-vis des autres compartiments ou alvéoles.

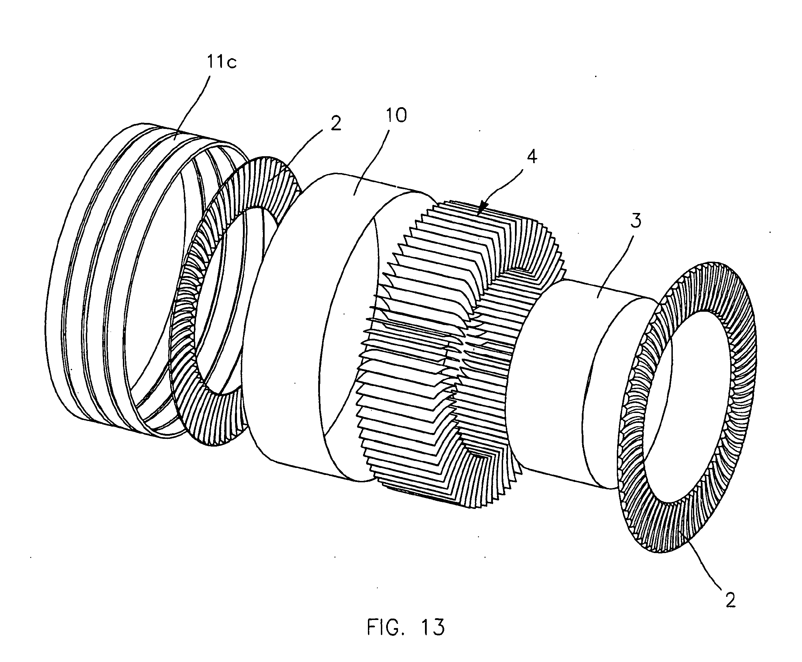

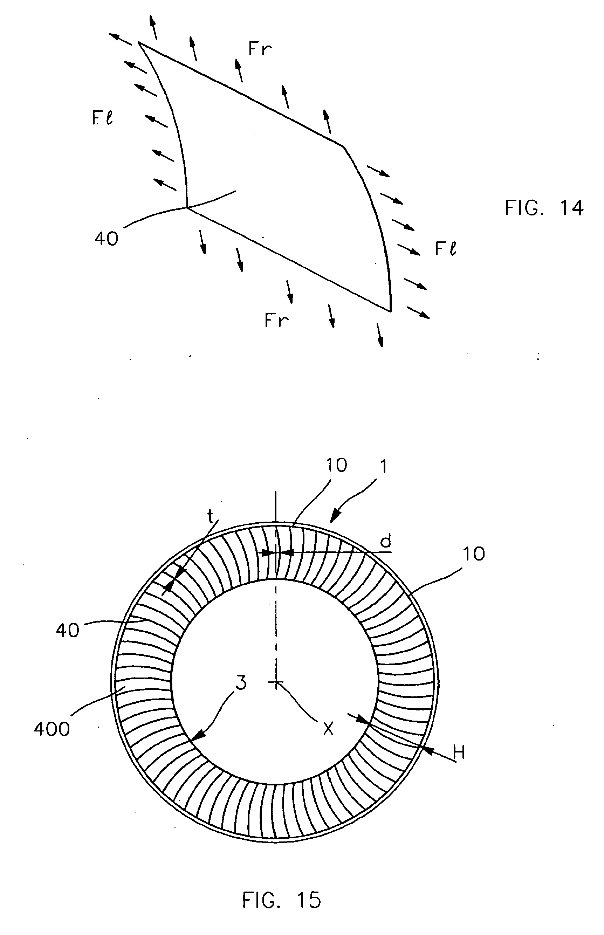

Dans les modes de réalisation illustrés aux figures 4, 11 à 13 et 15, la structure porteuse 4 comprend un ensemble de lamelles 40 dont l'une est illustrée à la figure 14.

Ces lamelles 40, qui adoptent une position radiale ou pratiquement radiale, partagent le volume annulaire V en une pluralité de compartiments 400 qui se succèdent les uns aux autres suivant une direction qui, localement, est tangentielle par rapport au pneu et qui, globalement, suit la circonférence de ce pneu.

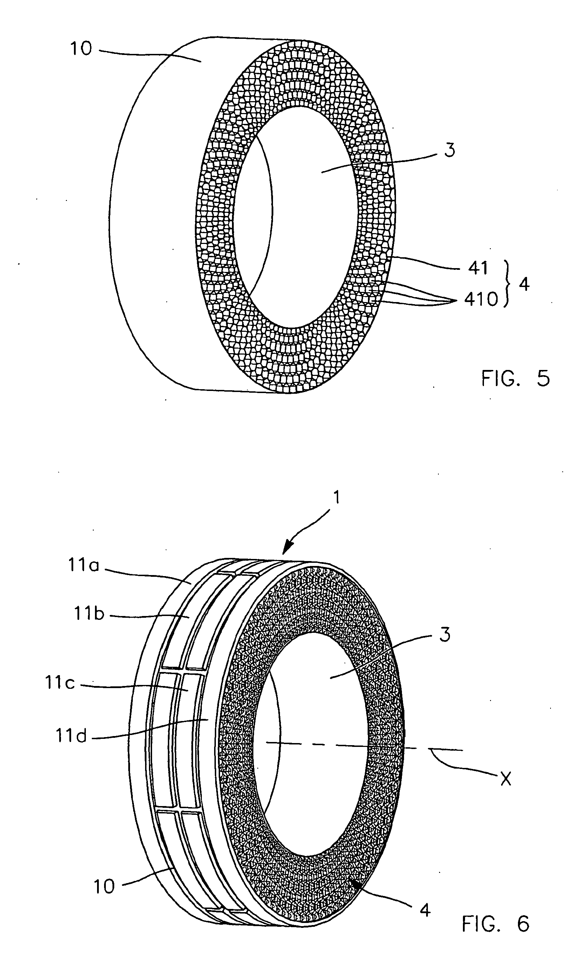

Dans le mode de réalisation illustré aux figures 5 à 10, la structure porteuse 4 comprend un ensemble de parois internes 41, qui partagent le volume annulaire V du pneu en une pluralité d'alvéoles 410 en nid d'abeille.

Ces alvéoles sont juxtaposées à la fois suivant une direction tangentielle et suivant une direction radiale du pneu, chacune d'elles s'étendant ainsi suivant une direction parallèle à l'axe du pneu.

La structure porteuse 4 peut être réalisée par injection ou extrusion.

La virole interne 3 est préférablement assemblée à une jante ou à un moyeu de roue sensiblement cylindrique par une liaison démontable.

La virole externe 10 est préférablement tendue par la pression du gaz contenu dans le volume annulaire V du pneu.

Les parois latérales 2 peuvent par exemple être réalisées en une mousse à cellules fermées, adhérisée aux viroles interne 3 et externe 10, ainsi qu'à chacune des lamelles radiales 40.

La structure 4, qui est logée entre les flancs 2, sert alors à renforcer la mousse en la contenant à l'intérieur des parois que constituent les viroles 3 et 10 et les lamelles 40 ou les parois internes 41.

Les compartiments 400, de même que les alvéoles 410, peuvent être conçues pour communiquer entre eux ou non.

En revanche, il est judicieux de respecter un rapport de forme entre la largeur des flancs 2 et la distance maximale entre les parois des alvéoles ou des compartiments contenant la mousse, en fonction de la pression de gonflage et de la densité de la mousse, afin d'éviter un phénomène d'extrusion de cette mousse.

Typiquement, dans le cas du mode de réalisation de la figure 4, pour une pression de gonflage de 2 bars et pour une mousse de densité 0.1, un rapport de forme adéquat peut être obtenu en donnant à la largeur du flanc 2 une valeur supérieure à 20 mm, et en choisissant une distance maximale entre parois inférieure à 15 mm, correspondant en l'occurrence à l'écartement maximal des lamelles 40.

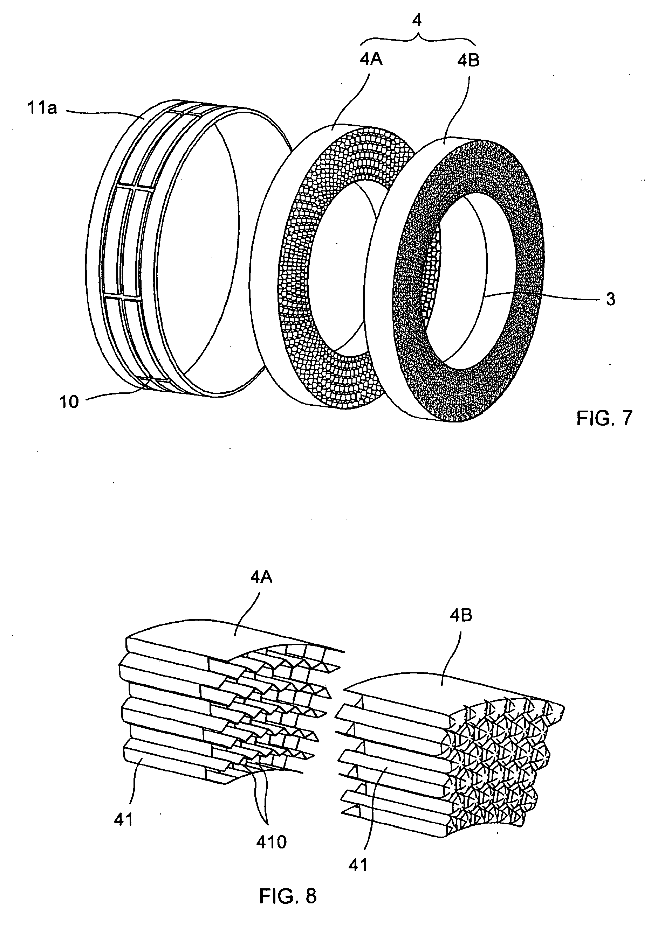

Dans le mode de réalisation des figures 7 à 10, la structure porteuse 4 pressurisée est réalisée par l'assemblage de deux coquilles 4A et 4B, sensiblement symétriques par rapport au plan de roue et obtenues par injection ou déformation.

La figure 6 décrit un pneumatique ainsi réalisé.

Plus précisément, une bande de roulement 1 composée de plusieurs reliefs tels que 11a et 11b est adhérisée à la virole externe 10 recouvrant une structure porteuse 4 également dotée d'une virole interne 3.

La virole interne 3 permet d'assembler cette structure porteuse 4 à une jante ou à un moyeu sensiblement cylindrique au moyen d'une liaison démontable.

La figure 7 illustre un premier exemple d'assemblage de la structure porteuse.

Les reliefs tels que 11a de la bande de roulement 1 sont adhérisés sur la virole externe 10, et celle-ci est assemblée à la structure porteuse 4.

En variante, les reliefs tels que 11a peuvent être adhérisés directement sur la structure porteuse 4, la fonction de la virole externe 10 étant alors intégrée à celle de cette structure porteuse.

La structure porteuse 4 est composée de deux coquilles 4A et 4B sensiblement identiques qui peuvent être fabriquées par injection dans un moule assez simple, avec une direction de démoulage parallèle à l'axe de rotation du pneumatique.

La figure 8 illustre la construction des coquilles 4A et 4B en zoomant sur un secteur.

Chacune de ces coquilles est constituée d'un ensemble d'alvéoles en nid d'abeille disposées transversalement et sensiblement parallèles à l'axe de rotation du pneumatique.

Chacune de ces alvéoles est fermée à l'extrémité située du côté extérieur du pneu par une paroi se rapprochant le plus possible d'une forme hémisphérique pour assurer l'étanchéité de la structure porteuse 4, tout en lui permettant de grandes déformations, notamment radiales.

Les parois des alvéoles situées à une même distance de l'axe du pneu ont sensiblement la même épaisseur, cette épaisseur pouvant en revanche décroître à distance croissante de l'axe.

Sur le côté intérieur du pneu, les parois sensiblement radiales des alvéoles se terminent préférablement en retrait des parois sensiblement circonférentielles, pour permettre à ces dernières de constituer des couronnes de pontage circonférentielles emboîtables l'une dans l'autre.

Un mode de réalisation d'emboîtage possible (figures 7 et 8) consiste à fabriquer deux coquilles avec le même moule, et à emboîter une coquille chaude avec une coquille froide, les couronnes de pontage de la coquille froide étant plus petites diamétralement au moment de l'emboîtage, et se frettant avec les couronnes de l'autre coquille au fur et à mesure que les températures des deux coquilles s'équilibrent.

En plus d'être frettées, les couronnes de pontage peuvent être collées ou soudées.

La structure porteuse 4 ainsi réalisée comporte des canaux d'une largeur égale à la largeur des couronnes de pontage qui équilibrent la pression de chacune des couches d'alvéoles qui peuvent communiquer à leur tour entre elles ou non.

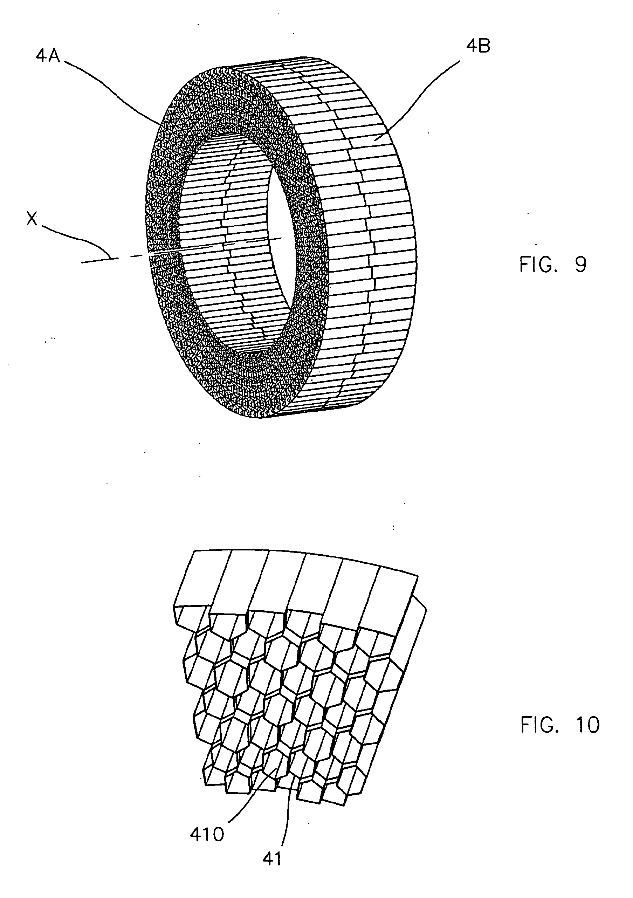

Les figures 9 et 10 représentent un deuxième exemple d'assemblage des coquilles 4A et 4B, dans lequel chacune des alvéoles d'une coquille s'emboîte avec l'alvéole située en vis-à-vis sur l'autre coquille, ce qui permet une étanchéité individuelle des alvéoles, ou un passage d'air ou de gaz d'une alvéole à l'autre avec un débit limité.

Les figures 11 à 15 illustrent un autre mode de réalisation d'un pneu conforme à l'invention.

Dans ce mode de réalisation, la virole interne 3 est solidaire des lamelles radiales 40 et des flancs 2, ces lamelles et ces flancs étant eux-mêmes solidaires de la virole externe 10 qui porte la bande de roulement 1.

La liaison entre la virole interne 3 et les flancs 2 d'une part, et entre les flancs 2 et la virole externe 10 d'autre part est étanche.

Les flancs 2, la virole interne 3 et la virole externe 10 sont également étanches pour contenir la pression interne du pneu.

Dans le cas où les lamelles radiales 40 sont elles-mêmes étanches, elles peuvent, avec des liaisons étanches, compartimenter le volume annulaire V du pneumatique en autant de compartiments indépendants qu'il y a de lamelles, ce qui conduit en quelque sorte à la réalisation d'une carcasse alvéolaire.

Dans ce cas, et sous réserve de prévoir un grand nombre de compartiments, la crevaison d'un de ces compartiments n'est pas de nature à affecter le bon fonctionnement du pneumatique, qui ne peut subir aucune perte brutale de pression globale.

En variante, un petit orifice peut être pratiqué dans les lamelles radiales 10 pour faire communiquer les compartiments entre eux, de façon à avoir une gestion unique de la pression (gonflage et surveillance de la pression dans le cas d'utilisation de matériaux conventionnels). Le calibre de l'orifice est suffisamment petit pour éviter toute perte brutale de la pression globale du pneumatique dans le cas d'une déchirure accidentelle d'un ou de quelques compartiments.

Les lamelles 40 sont disposées de façon sensiblement radiale et sont tendues latéralement par l'action de la pression de gonflage sur les flancs 2, qui génère sur les lamelles des efforts latéraux F1 représentés par des flèches latérales sur la figure 14.

Le profil des flancs 2 dans une section méridienne du pneu n'est plus alors nécessairement le profil dit "d'équilibre convexe" comme c'est le cas dans l'état de l'art, mais peut revêtir beaucoup d'autres formes telles qu'une forme concave par exemple. Cet avantage peut être mis à profit pour disposer de profils différents sur les deux flancs 2.

Les lamelles 40 peuvent aussi être tendues radialement par la pression de gonflage agissant sur la virole externe 10, en l'absence de charge appliquée au pneumatique.

Pour cela, les lamelles 40 sont sensiblement planes et radiales, la dimension d, ou "flèche", illustrée à la figure 15 ayant une valeur nulle, le module de rigidité du matériau des lamelles 40 étant beaucoup plus élevé que celui de la virole externe 10.

La virole externe 10 a tendance à augmenter en diamètre, ce qui a pour effet de tirer sur les lamelles radiales 40 et de générer sur les lamelles 40 les efforts radiaux Fr illustrés par les flèches verticales de la figure 14.

En variante, en l'absence de charge appliquée au pneumatique, toute l'action de la pression de gonflage sur la virole externe 10 peut être reprise par cette virole. Il convient alors que cette virole 10 soit très rigide dans le sens de sa circonférence et donc pratiquement inextensible, les efforts radiaux Fr exercés sur les lamelles 40 étant sensiblement nuls.

Les lamelles 40 peuvent quant à elles être fabriquées légèrement courbes avec une valeur typique de la dimension d de la figure 15 de tout au plus quelques millimètres pour un pneu tourisme.

Les lamelles 40 sont de préférence nombreuses, très fines et de forme élancée (figure 15). Pour un pneu tourisme 205/55 R16, une construction avantageuse utilise 120 lamelles présentant une hauteur radiale H d'environ 110 mm, et une épaisseur t d'environ 0.1 mm pour de l'acier et d'environ 0.3 mm pour du polyamide 6/6.

Les lamelles 40 ne peuvent donc, en première approximation, transmettre que des efforts en tension (flèches de la figure 14) ou par réduction d'efforts initialement en tension.

La virole externe 10 est fine et souple pour bien se conformer au sol dans la zone de l'aire de contact, permettant ainsi l'optimisation de l'empreinte au sol.

En revanche, à l'opposé de l'aire de contact, elle a une forme bien circulaire, rigidifiée par la pression de gonflage, et peut soutenir la charge verticale qui est exercée par le moyeu ou à roue, par l'intermédiaire de la virole interne 4 et des lamelles 40 dans lesquelles transitent les efforts radiaux générés par le port de charge.

En première approximation, en négligeant le rôle que jouent les flancs 2 dans le port de charge, le moyeu ou la roue du véhicule sont en quelque sorte suspendus aux lamelles 40 et à la virole externe 10, ce qui a pour effet de minimiser la surcharge sur la suspension et le pneumatique occasionnée par le franchissement d'obstacles en saillie.

Un haut niveau de rigidité latérale et de rigidité de dérive est obtenu par la rigidification due à l'action de la pression de gonflage sur la virole externe 10 et sur les lamelles 40 toutes soumises aux efforts latéraux Fl (figure 14), et à l'action du port de charge sur les lamelles 40 soumises aux efforts radiaux Fr à l'opposé de l'aire de contact.

Les lamelles 40 cumulent ainsi plusieurs fonction, à savoir notamment la reprise du port de charge, le renfort de la mousse, le support latéral des flancs 2 au plus court, évitant à ces flancs de s'écarter sous l'action de la pression de gonflage, et la reprise de la poussée de dérive, ce qui permet d'utiliser au mieux la matière de ces lamelles.

Le couple (moteur ou freineur) est transmis en partie par les flancs 2, et en partie par l'inclinaison des lamelles 40 qui s'écartent de leur position radiale en réponse à une légère rotation de la virole interne 3 par rapport à la virole externe 10.

Le pneumatique selon l'invention est préférentiellement fabriqué en extrudant en une pièce la virole externe 10, la virole interne 3 et les lamelles radiales 40 dans une matière telle que le polyamide ou le polyester, puis en surmoulant les flancs 2 et la bande de roulement 1.

En particulier, il est possible de réaliser les viroles 3 et 10, ainsi que les lamelles 40 et les parois internes 41, dans un matériau composite formé de fibres noyées dans une matrice de résine.

Quel que soit le mode de réalisation, la différence entre la pression de gonflage régnant à l'intérieur de la structure porteuse 4 et la pression atmosphérique régnant à l'extérieur du pneu rigidifie les parois 41 ou les lamelles 40, et permet de réaliser cette structure avec des parois ou des lamelles de très faible épaisseur.

## Revendications

1. Pneu comprenant une enveloppe au moins partiellement réalisée en gomme, délimitant un volume annulaire intérieur (V) soumis en fonctionnement à une pression de gonflage et présentant un sommet (1) et deux flancs (2), le sommet (1), se raccordant à chacun des deux flancs (2) et définissant une bande de roulement, ce pneu comprenant en outre au moins une virole interne (3), une virole externe (10), et une structure porteuse (4), la virole interne (3) étant disposée de manière concentrique à l'intérieur et à distance du sommet (1), la virole externe (10) appartenant au sommet du pneu, et la structure porteuse (4) étant logée au moins partiellement dans le volume intérieur (V) et reliant l'une à l'autre les viroles externe (10) et interne (3), **caractérisé en ce que** la structure porteuse (4) est pressurisée et partage le volume annulaire (V) en une pluralité de compartiments ou d'alvéoles (400, 410), et **en ce que** les flancs (2) sont liés ou intégrés à la structure porteuse (4).

2. Pneu suivant la revendication 1, **caractérisé en ce que** la virole externe (10) est formée d'une feuille annulaire continue, sur laquelle sont adhérisés des pavés de gomme (11a, 11b, 11c) constituant la bande de roulement.

3. Pneu suivant l'une quelconque des revendications précédentes , **caractérisé en ce que** les viroles interne (3) et externe (10) sont étanches et **en ce que** les flancs (2) sont formés de parois latérales se raccordant de façon étanche aux viroles externe (10) et interne (3) pour délimiter ledit volume annulaire (V) de façon étanche.

4. Pneu suivant l'une quelconque des revendications précédentes, **caractérisé en ce que** chaque virole (10, 3) est constituée d'une feuille annulaire continue réalisée en métal ou en un alliage métallique.

5. Pneu suivant l'une quelconque des revendications précédentes, **caractérisé en ce que** chaque virole (10, 3) est constituée d'un matériau compris dans d'ensemble comprenant l'acier inoxydable et un alliage d'aluminium.

6. Pneu suivant l'une quelconque des revendications précédentes, **caractérisé en ce que** ladite structure (4) comprend un ensemble de lamelles radiales (40) partageant le volume annulaire (V) en une pluralité de compartiments (400) se succédant les uns aux autres suivant une direction tangentielle du pneu.

7. Pneu suivant l'une quelconque des revendications 1 à 5, **caractérisé en ce que** ladite structure (4) comprend un ensemble de parois internes (41) partageant le volume annulaire (V) en une pluralité d'alvéoles (410) en nid d'abeille juxtaposées à la fois suivant une direction tangentielle et suivant une direction radiale du pneu.

8. Pneu suivant l'une quelconque des revendications 6 et 7, **caractérisé en ce que** certains au moins desdits compartiments ou desdites alvéoles (400, 410) sont étanches.

## Claims

1. Tyre comprising an envelope made at least partly of rubber, defining an internal annular volume (V) which is subjected in operation to an inflation pressure and has a crown (1) and two sidewalls (2), the crown (1) being joined to each of the two sidewalls (2) and defining a tread, this tyre also comprising at least one inner annular band (3), an outer annular band (10), and a supporting structure (4), the inner annular band (3) being arranged concentrically inside of and at a distance from the crown (1), the outer annular band (10) belonging to the crown of the tyre, and the supporting structure (4) being housed at least partially inside the internal volume (V) and connecting together the outer annular band (10) and the inner annular band (3), said tyre being **characterized in that** the supporting structure (4) is pressurized and divides the annular volume (V) into a plurality of compartments or cells (400, 410), and **in that** the sidewalls (2) are connected to or integral with the supporting structure (4).

2. Tyre according to Claim 1, **characterized in that** the outer annular band (10) is formed of a continuous annular sheet to which rubber blocks (11a, 11b, 11c) forming the tread are stuck.

3. Tyre according to either of the preceding claims, **characterized in that** the inner annular band (3) and outer annular band (10) are airtight and **in that** the sidewalls (2) are formed of lateral walls joined in an airtight manner to the outer (10) and inner (3) annular bands in order to define said annular volume (V) in an airtight manner.

4. Tyre according to any one of the preceding claims, **characterized in that** each annular band (10, 3) consists of a continuous annular sheet made of metal or a metal alloy.

5. Tyre according to any one of the preceding claims, **characterized in that** each annular band (10, 3) consists of a material from the group comprising stainless steel and an aluminium alloy.

6. Tyre according to any one of the preceding claims, **characterized in that** said structure (4) comprises a plurality of radial partition walls (40) which divide the annular volume (V) into a plurality of compartments (400) that succeed one another in a direction tangential to the tyre.

7. Tyre according to any one of Claims 1 to 5, **characterized in that** said structure (4) comprises a plurality of internal walls (41) that divide the annular volume (V) into a plurality of honeycomb cells (410) juxtaposed in both a tangential direction and a radial direction of the tyre.

8. Tyre according to either of Claims 6 and 7, **characterized in that** at least some of said compartments or of said cells (400, 410) are airtight.

## Patentansprüche

1. Luftreifen, der einen wenigstens teilweise aus Gummi hergestellten Mantel umfasst, der ein ringförmiges Innenvolumen (V) begrenzt, in dem im Betrieb ein Aufblasdruck herrscht, und der eine Oberseite (1) sowie zwei Seitenflächen (2) aufweist, wobei die Oberseite (1) mit jeder der zwei Seitenflächen (2) verbunden ist und eine Lauffläche definiert, wobei dieser Luftreifen außerdem wenigstens einen Innenring (3), einen Außenring (10) und eine Tragstruktur (4) aufweist, wobei der Innenring (3) konzentrisch innerhalb und in einem Abstand von der Oberseite (1) angeordnet ist, wobei der Außenring zu der Oberseite des Luftreifens gehört und wobei sich die Tragstruktur (4) wenigstens teilweise in dem Innenvolumen (V) befindet und den Außenring (10) und den Innenring (3) miteinander verbindet, **dadurch gekennzeichnet, dass** die Tragstruktur (4) mit Druck beaufschlagt ist und das ringförmige Volumen (V) in mehrere Fächer oder Waben (400, 410) unterteilt und dass die Seitenflächen (2) mit der Tragstruktur (4) verbunden oder in diese integriert sind.

2. Luftreifen nach Anspruch 1, **dadurch gekennzeichnet, dass** der Außenring (10) die Form einer ununterbrochenen ringförmigen Folie hat, auf der Gummistollen (11a, 11b, 11c) haften, die die Lauffläche bilden.

3. Luftreifen nach einem der vorhergehenden Ansprüche, **dadurch gekennzeichnet, dass** der Innenring (3) und der Außenring (10) dicht sind und dass die Seitenflächen (2) aus seitlichen Wänden gebildet sind, die mit dem Außenring (10) und mit dem Innenring (3) dicht verbunden sind, um das ringförmige Volumen (V) dicht zu begrenzen.

4. Luftreifen nach einem der vorhergehenden Ansprüche, **dadurch gekennzeichnet, dass** jeder Ring (10, 3) aus einer ununterbrochenen ringförmigen Folie gebildet ist, die aus Metall oder einer Metalllegierung hergestellt ist.

5. Luftreifen nach einem der vorhergehenden Ansprüche, **dadurch gekennzeichnet, dass** jeder Ring (10, 3) aus einem Material gebildet ist, das in der Gesamtheit enthalten ist, die Edelstahl und eine Aluminiumlegierung enthält.

6. Luftreifen nach einem der vorhergehenden Ansprüche, **dadurch gekennzeichnet, dass** die Struktur (4) eine Gesamtheit radialer Lamellen (40) umfasst, die das ringförmige Volumen (V) in mehrere Fächer (400) unterteilen, die in einer tangentialen Richtung des Luftreifens aufeinander folgen.

7. Luftreifen nach einem der Ansprüche 1 bis 5, **dadurch gekennzeichnet, dass** die Struktur (4) eine Gesamtheit von Innenwänden (41) umfasst, die das ringförmige Volumen (V) in mehrere Bienenwaben (410) unterteilen, die sowohl in einer tangentialen Richtung als auch in einer radialen Richtung des Luftreifens nebeneinander angeordnet sind.

8. Luftreifen nach einem der Ansprüche 6 und 7, **dadurch gekennzeichnet, dass** wenigstens einige der Fächer oder der Waben (400, 410) dicht sind.
